# EUROPEAN PATENT APPLICATION

(11) **EP 2 711 819 A1**
(43) Date of publication of application: **26.03.2014**
(21) Application number: 12826238.3
(22) Date of filing: 20.08.2012
(51) Int. Cl.: G06F 3/048, G06F 3/0488

(54) **HANDHELD DEVICE OPERATION MODE IDENTIFICATION METHOD AND HANDHELD DEVICE**

(30) Priority: 19.08.2011 CN 201110240019
(71) Applicant: Huawei Device Co., Ltd., Shenzhen, Guangdong 518129 (CN)
(72) Inventor: LIU, Zhijie, Shenzhen Guangdong 518129 (CN)
(74) Representative: Lord, Michael
(86) International application number: PCT/CN2012/080331
(87) International publication number: WO 2013/026377

(57) **Abstract**

The embodiments of the present invention provide a method for identifying an operation mode of a handheld device and a handheld device, and relate to the field of electronic technologies, to solve a problem of operation inconvenience caused by a difference between left and right hand usage habits. The method includes: obtaining left and right hand operation information of a user; if the operation information indicates that the user uses the right hand to perform an operation, displaying a first preset operation interface that conforms to a right hand operation habit on a screen of the handheld device; and if the operation information indicates that the user uses the left hand to perform an operation, displaying a second preset operation interface that conforms to a left hand operation habit on the screen of the handheld device. The embodiments of the present invention are applicable to operating a handheld device.

## Description

This application claims priority to Chinese Patent Application No. 201110240019.X, filed with the Chinese Patent Office on August 19, 2011 and entitled "METHOD FOR IDENTIFYING OPERATION MODE OF HANDHELD DEVICE AND HANDHELD DEVICE", which is incorporated herein by reference in its entirety.

### TECHNICAL FIELD

The present invention relates to the field of electronic technologies, and in particular, to a method for identifying an operation mode of a handheld device and a handheld device.

### BACKGROUND

At present, for handheld devices in markets, for example, mobile phones, screens are made larger and larger, and, to improve user experience, most of screens support touch operations. However, due to some operation modes and button layouts, and so on, it is very difficult for a user to use one hand to accomplish all operations, and sometimes, the user has to use two hands to perform an operation.

Some handheld device manufacturers have already discovered this problem, and have already launched products that are suitable for single-hand operations. However, operations on handheld devices of this type are all performed by using the right hand, which brings much inconvenience to a user that is accustomed to using a handheld device by using the left hand.

### SUMMARY

Embodiments of the present invention provide a method for identifying an operation mode of a handheld device and a handheld device, to solve a problem of operation inconvenience caused by a difference between left and right hand usage habits.

In order to achieve the foregoing objective, the embodiments of the present invention adopt the following technical solutions.

In one aspect, a method for identifying an operation mode of a handheld device is provided and includes:
obtaining left and right hand operation information of a user;
if the operation information indicates that the user uses the right hand to perform an operation, displaying a first preset operation interface that conforms to a right hand operation habit on a screen of the handheld device; and
if the operation information indicates that the user uses the left hand to perform an operation, displaying a second preset operation interface that conforms to a left hand operation habit on the screen of the handheld device.

In one aspect, a handheld device is provided and includes:
an obtaining unit, configured to obtain left and right hand operation information of a user; and
a displaying unit, configured to: if the operation information indicates that the user uses the right hand to perform an operation, display a first preset operation interface that conforms to a right hand operation habit on a screen of the handheld device; and if the operation information indicates that the user uses the left hand to perform an operation, display a second preset operation interface that conforms to a left hand operation habit on the screen of the handheld device.

In one aspect, a handheld device is provided and includes:
a touchscreen;
at least two sensors, respectively located on two sides on the left and right of the handheld device, and configured to obtain left and right hand operation information of a user; and
at least one processor, coupled to the touchscreen and connected to the sensors, where the processor is configured to: if the operation information indicates that the user uses the right hand to perform an operation, display a first preset operation interface that conforms to a right hand operation habit on the touchscreen of the handheld device; and if the operation information indicates that the user uses the left hand to perform an operation, display a second preset operation interface that conforms to a left hand operation habit on the touchscreen of the handheld device.

In one aspect, a handheld device is provided and includes:
a touchscreen;
a user interface, configured to receive left and right hand operation information input by a user; and
at least one processor, coupled to the touchscreen and connected to the user interface, where the processor is configured to: if the operation information indicates that the user uses the right hand to perform an operation, display a first preset operation interface that conforms to a right hand operation habit on the touchscreen of the handheld device; and if the operation information indicates that the user uses the left hand to perform an operation, display a second preset operation interface that conforms to a left hand operation habit on the touchscreen of the handheld device.

With the method for identifying an operation mode of a handheld device and the handheld device provided in the embodiments of the present invention, left and right hand operation information of a user is obtained; if the operation information indicates that the user uses the right hand to perform an operation, a first preset operation interface that conforms to a right hand operation habit is displayed on a screen of the handheld device; and if the operation information indicates that the user uses the left hand to perform an operation, a second preset operation interface that conforms to a left hand operation habit is displayed on the screen of the handheld device. In this way, according to a difference between left and right hand operations of a user, a preset interface corresponding to a left or right hand operation habit can be displayed, and it is convenient for the user to use the left hand or the right hand to perform a single-hand operation.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show only some embodiments of the present invention, and persons of ordinary skill in the art may still derive other drawings from these accompanying drawings without creative efforts.
FIG. 1 is a schematic flowchart of a method for identifying an operation mode of a handheld device according to an embodiment of the present invention;
FIG. 2 is a schematic diagram of a sensor of a handheld device according to an embodiment of the present invention;
FIG. 3 is a schematic structural diagram of a handheld device according to an embodiment of the present invention;
FIG. 4 is a schematic structural diagram of a handheld device according to another embodiment of the present invention;
FIG. 5 is a schematic structural diagram of a handheld device according to still another embodiment of the present invention; and
FIG. 6 is a schematic structural diagram of a handheld device according to yet another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

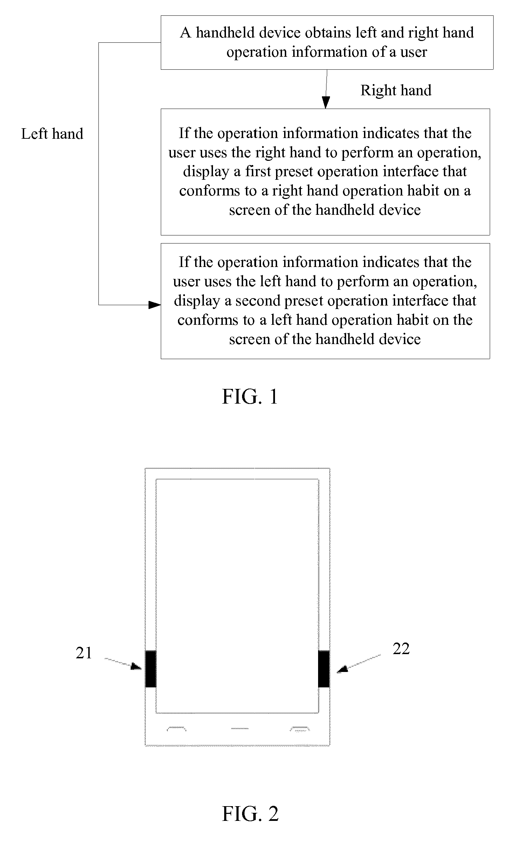

An embodiment of the present invention provides a method for identifying an operation mode of a handheld device. As shown in FIG. 1, the method includes the following steps.

S10. Obtain left and right hand operation information of a user.

Exemplarily, a specific obtaining manner may be obtaining the left and right hand operation information of the user by using sensors located on two sides on the left and right of the handheld device, and may also be obtaining the left and right hand operation information of the user by receiving left and right hand operation information input by the user.

S 11. If the operation information indicates that the user uses the right hand to perform an operation, display a first preset operation interface that conforms to a right hand operation habit on a screen of the handheld device.

S12. If the operation information indicates that the user uses the left hand to perform an operation, display a second preset operation interface that conforms to a left hand operation habit on the screen of the handheld device.

In this way, according to a difference between left and right hand operations of a user, a preset interface corresponding to a left or right hand operation habit can be displayed, and it is convenient for the user to use the left hand or the right hand to perform a single-hand operation.

A method for identifying an operation mode of a handheld device provided in another embodiment of the present invention is described by taking a touch-screen mobile phone with sensors set on two sides on the left and right as an example.

A manufacturer presets two sets of operation interfaces in a mobile phone in this embodiment during production, that is, a first operation interface corresponding to a right hand operation habit and a second operation interface corresponding to a left and right operation habit. In addition, a sensor is set on each of two sides on the left and right of the mobile phone, as shown in FIG. 2, in the embodiment, which may be an optical sensor 21 and an optical sensor 22.

When a user operates a mobile phone by using a single hand, if the left hand is used, the palm of the left hand contacts the optical sensor 21 on the left side of the mobile phone, and the optical sensor 21 is covered and the amount of light changes. Therefore, it is determined that the user currently uses the left hand to perform an operation. In this case, the mobile phone displays a second preset operation interface that conforms to a left hand operation habit on the screen.

Likewise, if the user uses the right hand, the palm of the right hand contacts the optical sensor 22 on the right side of the mobile phone, and the optical sensor 22 is covered and the amount of light changes. Therefore, it is determined that the user currently uses the right hand to perform an operation. In this case, the hand displays a first preset operation interface that conforms to a right hand operation habit on the screen.

With the method for identifying an operation mode of a handheld device provided in the embodiment of the present invention, left and right hand operation information of a user is obtained by using sensors located on two sides on the left and right of the handheld device; if the operation information indicates that the user uses the right hand to perform an operation, a first preset operation interface that conforms to a right hand operation habit is displayed on a screen of the handheld device; and if the operation information indicates that the user uses the left hand to perform an operation, a second preset operation interface that conforms to a left hand operation habit is displayed on the screen of the handheld device. In this way, according to a difference between left and right hand operations of a user, a preset interface corresponding to a left or right hand operation habit can be displayed, and it is convenient for the user to use the left hand or the right hand to perform a single-hand operation.

It should be noted that, that the sensors in the embodiment are optical sensors is only an example, to which the embodiments of the present invention is not limited. Another sensor that can obtain left and right hand operation information of a user is also available, for example, a proximity sensor. When the left hand or the right hand of a user approaches to a certain distance from a proximity sensor, a handheld device can obtain left and right hand operation information of the user.

A method for identifying an operation mode of a handheld device provided in still another embodiment of the present invention is described by taking a touch-screen mobile phone as an example.

A manufacturer presets two sets of operation interfaces in a mobile phone in this embodiment during production, that is, a first operation interface corresponding to a right hand operation habit and a second operation interface corresponding to a left and right operation habit.

When a user uses a mobile phone provided in the embodiment, the user may first enter a menu option of the mobile phone, and then set a single-hand operation habit in the menu option. After setting and saving, the mobile phone receives left and right hand operation information input by the user, and can determine, according to the left and right operation information, whether the user uses the right hand or the left hand. If it is determined that the user uses the right hand to perform an operation, a first preset operation interface that conforms to a right hand operation habit is displayed on a screen; and if it is determined that the user uses the left hand to perform an operation, a second preset operation interface that conforms to a left hand operation habit is displayed on the screen.

In addition, a hardware switch may also be disposed on the mobile phone. By toggling the hardware switch, a left or right hand operation habit of a user is set. It should be noted that, various types of methods for manually setting a left or right hand operation habit may also exist, which are not listed one by one herein.

With the method for identifying an operation mode of a handheld device provided in the embodiment of the present invention, left and right hand operation information input by a user is received; if the operation information indicates that the user uses the right hand to perform an operation, a first preset operation interface that conforms to a right hand operation habit is displayed on a screen of the handheld device; and if the operation information indicates that the user uses the left hand to perform an operation, a second preset operation interface that conforms to a left hand operation habit is displayed on the screen of the handheld device. In this way, according to a difference between left and right hand operations of a user, a preset interface corresponding to a left or right hand operation habit can be displayed, and it is convenient for the user to use the left hand or the right hand to perform a single-hand operation.

It should be noted that, the handheld device in the foregoing embodiments is described by taking a mobile phone as an example. However, the embodiments of the present invention are not limited to this, and other types of handheld devices are all available.

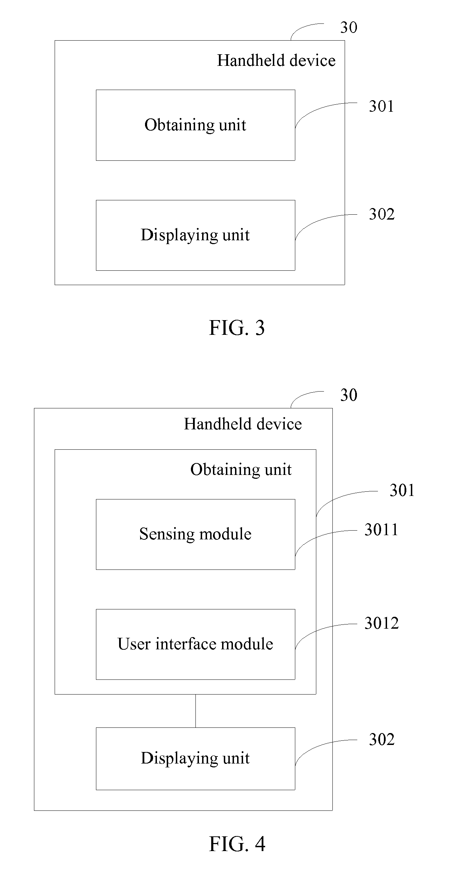

A handheld device 30 provided in an embodiment of the present invention, as shown in FIG. 3, includes:
an obtaining unit 301, configured to obtain left and right hand operation information of a user; and
a displaying unit 302, configured to: if the operation information indicates that the user uses the right hand to perform an operation, display a first preset operation interface that conforms to a right hand operation habit on a screen of the handheld device; and if the operation information indicates that the user uses the left hand to perform an operation, display a second preset operation interface that conforms to a left hand operation habit on the screen of the handheld device.

In this way, according to a difference between left and right hand operations of a user, a preset interface corresponding to a left or right hand operation habit can be displayed, and it is convenient for the user to use the left hand or the right hand to perform a single-hand operation.

Further, as shown in FIG. 4, the obtaining unit 301 includes one or two of the following two modules:
at least two sensing modules 3011, respectively located on two sides on the left and right of the handheld device, and configured to obtain the left and right hand operation information of the user; and
a user interface module 3012, configured to receive the left and right hand operation information input by the user.

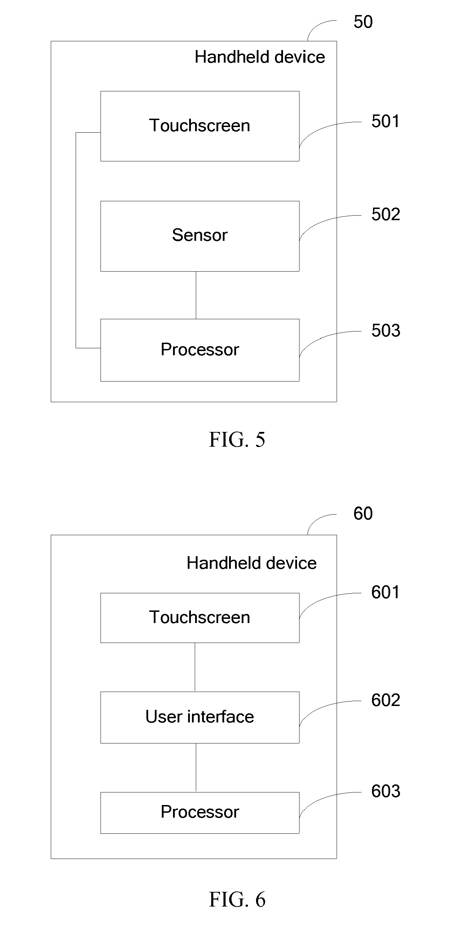

A handheld device 50 provided in another embodiment of the present invention, as shown in FIG. 5, includes:
a touchscreen 501;
at least two sensors 502, respectively located on two sides on the left and right of the handheld device 50, and configured to obtain left and right hand operation information of a user; and
at least one processor 503, coupled to the touchscreen 501 and connected to the sensors 502, where the processor 503 is configured to: if the operation information indicates that the user uses the right hand to perform an operation, display a first preset operation interface that conforms to a right hand operation habit on the touchscreen 501 of the handheld device 50; and if the operation information indicates that the user uses the left hand to perform an operation, display a second preset operation interface that conforms to a left hand operation habit on the touchscreen 501 of the handheld device 50.

The sensors 502 may include an optical sensor or a proximity sensor.

The handheld device provided in the embodiment of the present invention obtains left and right hand operation information of a user by using sensors on two sides on the left and right of the handheld device; if a processor determines that the operation information indicates that the user uses the right hand to perform an operation, displays a first preset operation interface that conforms to a right hand operation habit on a touchscreen of the handheld device; and if the processor determines that the operation information indicates that the user uses the left hand to perform an operation, displays a second preset operation interface that conforms to a left hand operation habit on the touchscreen of the handheld device. In this way, according to a difference between left and right hand operations of a user, a preset interface corresponding to a left or right hand operation habit can be displayed, and it is convenient for the user to use the left hand or the right hand to perform a single-hand operation.

A handheld device 60 provided in still another embodiment of the present invention, as shown in FIG. 6, includes:
a touchscreen 601;
a user interface 602, configured to receive left and right hand operation information input by a user; and
at least one processor 603, coupled to the touchscreen 601 and connected to the user interface 602, where the processor 603 is configured to: if the operation information indicates that the user uses the right hand to perform an operation, display a first preset operation interface that conforms to a right hand operation habit on the touchscreen 601 of the handheld device 6; and if the operation information indicates that the user uses the left hand to perform an operation, display a second preset operation interface that conforms to a left hand operation habit on the touchscreen 601 of the handheld device 60.

The handheld device provided in the embodiment of the present invention receives left and right hand operation information input by a user; if a processor determines that the operation information indicates that the user uses the right hand to perform an operation, displays a first preset operation interface that conforms to a right hand operation habit on a touchscreen of the handheld device; and if the processor determines that the operation information indicates that the user uses the left hand to perform an operation, displays a second preset operation interface that conforms to a left hand operation habit on the touchscreen of the handheld device. In this way, according to a difference between left and right hand operations of a user, a preset interface corresponding to a left or right hand operation habit can be displayed, and it is convenient for the user to use the left hand or the right hand to perform a single-hand operation.

The foregoing descriptions are only specific embodiments of the present invention, but are not intended to limit the protection scope of the present invention. Any variation or replacement readily figured out by persons skilled in the art within the technical scope disclosed in the present invention shall all fall within the protection scope of the present invention. Therefore, the protection scope of the present invention shall be subject to the protection scope of the claims.

## Claims

1. An method for identifying an operation mode of a handheld device, comprising:
obtaining left and right hand operation information of a user;
if the operation information indicates that the user uses the right hand to perform an operation, displaying a first preset operation interface that conforms to a right hand operation habit on a screen of the handheld device; and
if the operation information indicates that the user uses the left hand to perform an operation, displaying a second preset operation interface that conforms to a left hand operation habit on the screen of the handheld device.

2. The method according to claim 1, wherein the obtaining left and right hand operation information of a user comprises:
obtaining the left and right hand operation information of the user by using sensors located on two sides on the left and right of the handheld device.

3. The method according to claim 1, wherein the obtaining left and right hand operation information of a user comprises:
receiving the left and right hand operation information input by the user.

4. The method according to claim 2, wherein the sensors comprise an optical sensor or a proximity sensor.

5. A handheld device, comprising:
an obtaining unit, configured to obtain left and right hand operation information of a user; and
a displaying unit, configured to: if the operation information indicates that the user uses the right hand to perform an operation, display a first preset operation interface that conforms to a right hand operation habit on a screen of the handheld device; and if the operation information indicates that the user uses the left hand to perform an operation, display a second preset operation interface that conforms to a left hand operation habit on the screen of the handheld device.

6. The handheld device according to claim 5, wherein the obtaining unit comprises:
at least two sensing modules, respectively located on two sides on the left and right of the handheld device, and configured to obtain the left and right hand operation information of the user;
and/or,
a user interface module, configured to receive the left and right hand operation information input by the user.

7. A handheld device, comprising:
a touchscreen;
at least two sensors, respectively located on two sides on the left and right of the handheld device, and configured to obtain left and right hand operation information of a user; and
at least one processor, coupled to the touchscreen and connected to the sensors, wherein the processor is configured to: if the operation information indicates that the user uses the right hand to perform an operation, display a first preset operation interface that conforms to a right hand operation habit on the touchscreen of the handheld device; and if the operation information indicates that the user uses the left hand to perform an operation, display a second preset operation interface that conforms to a left hand operation habit on the touchscreen of the handheld device.

8. The handheld device according to claim 7, wherein the sensors comprise an optical sensor or a proximity sensor.

9. A handheld device, comprising:
a touchscreen;
a user interface, configured to receive left and right hand operation information input by a user; and
at least one processor, coupled to the touchscreen and connected to the user interface, wherein the processor is configured to: if the operation information indicates that the user uses the right hand to perform an operation, display a first preset operation interface that conforms to a right hand operation habit on the touchscreen of the handheld device; and if the operation information indicates that the user uses the left hand to perform an operation, display a second preset operation interface that conforms to a left hand operation habit on the touchscreen of the handheld device.
